# FASCICULE DE BREVET EUROPEEN

(11) **EP 1 462 214 B1**
(45) Date de publication et mention de la délivrance du brevet: **06.09.2006**
(21) Numéro de dépôt: 04290760.0
(22) Date de dépôt: 22.03.2004
(51) Int. Cl.: B23Q 17/00, B23Q 17/22

(54) **Procédé de vérification du positionnement d'une pièce mécanique dans un support et dispositif associé**
Verfahren und Vorrichtung zur Lageerfassung eines mechanischen Teils in einer Aufnahme
Method and device for detecting the position of a mechanical part in a support

(30) Priorité: 26.03.2003 FR 0303729
(43) Date de publication de la demande: 29.09.2004
(73) Titulaire: Process Conception Ingenierie S.A., 92190 Meudon (FR)
(72) Inventeur: Bruel, Maurice, 42330 Saint Medard en Forez (FR)
(74) Mandataire: Jacobson, Claude

(56) Documents cités:
- DE-A- 4 201 013
- DE-A- 4 302 530
- PATENT ABSTRACTS OF JAPAN vol. 010, no. 176 (M-491), 20 juin 1986 (1986-06-20) & JP 61 025753 A (NIIGATA ENG CO LTD), 4 février 1986 (1986-02-04)
- PATENT ABSTRACTS OF JAPAN vol. 014, no. 570 (M-1060), 18 décembre 1990 (1990-12-18) & JP 02 243252 A (SUZUKI MOTOR CO LTD), 27 septembre 1990 (1990-09-27)

## Description

La présente invention est relative à un procédé et à un dispositif de vérification du positionnement d'une pièce mécanique, notamment d'un outil, dans un support, notamment une broche ou une électrobroche (voir, par exemple, DE-4201013-A).

Le support est du type comprenant :
- un corps de support muni à une extrémité de moyens de positionnement, notamment d'un évidement de positionnement, de la pièce ;
- un organe de fixation de la pièce, monté mobile dans le corps entre une première position permettant la mise en place de la pièce et au moins une seconde position dans laquelle la pièce est fixée dans les moyens de positionnement ; et
- des moyens de détermination de la position relative de l'organe de fixation par rapport au corps.

Le procédé de la présente invention s'applique aux centres d'usinage équipés d'un système de chargement d'outils notamment pour la production en grande série de pièces complexes destinées à l'industrie automobile, ou à d'autres systèmes automatisés.

En effet, la complexité des pièces à réaliser nécessite l'utilisation successive d'une pluralité d'outils (en moyenne une vingtaine), pour réaliser le cycle complet de fabrication d'une pièce.

Comme il est bien connu, chaque outil devant être utilisé dans le cycle de fabrication est monté et fixé sur un support du type précité, puis démonté après utilisation. L'organe de fixation est généralement un tirant qui coulisse dans le corps du support. Les moyens de détermination de la position relative du tirant par rapport au corps permettent à un opérateur de déterminer si le tirant est dans la première ou la seconde position lors des différents changements d'outil.

Cependant, pour assurer une bonne qualité de production, il est essentiel de vérifier que l'outil est parfaitement positionné par le moyen de positionnement après chaque chargement d'outil, avant de lancer l'usinage correspondant.

Dans le cas d'un support d'outil rotatif, un mauvais positionnement se traduit en effet par un décentrement de l'outil par rapport à l'axe de rotation du support. Ce décentrement conduit à la production de pièces non conformes aux spécifications demandées.

Des procédés connus de vérification du positionnement de l'outil dans le support d'outil sont basés par exemple sur l'utilisation d'un palpeur de déplacement dans le voisinage de l'outil, dans le cas de supports d'outil rotatifs.

Après la mise en place de chaque outil lors du cycle de fabrication, le support est mis en rotation à vide pendant quelques secondes. Le palpeur de déplacement mesure le décentrement de l'outil. Au-delà d'un certain niveau, l'outil est considéré comme mal positionné.

De tels procédés de vérification ne donnent pas entière satisfaction. En effet, comme décrit ci-dessus, ces procédés nécessitent un temps d'utilisation du support d'outil à vide, non négligeable par rapport au temps d'utilisation réelle de l'outil pour l'usinage de la pièce (respectivement deux à trois secondes de vérification pour une vingtaine de secondes d'usinage). Compte tenu du nombre important d'outils à utiliser, la perte de productivité est lourde, particulièrement dans le cas de grandes séries.

L'invention a pour but principal de remédier à cet inconvénient, c'est-à-dire de produire des pièces complexes de manière fiable en maintenant une productivité élevée.

A cet effet, l'invention a pour objet un procédé de vérification du type précité, caractérisé en ce qu'il comprend les étapes suivantes :
- on positionne et on fixe la pièce dans les moyens de positionnement du support ;
- on calcule l'écart entre la position relative déterminée de l'organe de fixation et une position relative de référence ;
- on compare cet écart à un écart de référence qui est fonction d'au moins un écart calculé lors d'un précédent positionnement de référence d'une pièce sur les moyens de positionnement du support ; et
- on exprime la qualité du positionnement de la pièce en fonction du résultat de cette comparaison.

Le procédé suivant l'invention peut comporter une ou plusieurs des caractéristiques suivantes, prises isolément ou suivant toutes les combinaisons possibles :
- l'organe de fixation est un tirant monté coulissant dans le corps le long d'un axe ;
- l'écart de référence est fonction de l'écart calculé lors du dernier positionnement de référence de la pièce dans les moyens de positionnement du support ;
- l'écart de référence est fonction de la moyenne d'une pluralité d'écarts calculés lors de précédents positionnements de référence de la pièce dans les moyens de positionnement du support ;
- la position relative de référence est la position relative de la pièce déterminée lors du premier positionnement de cette pièce dans les moyens de positionnement du support ;
- la position relative de référence est la position relative déterminée lors d'un précédent positionnement de référence d'une autre pièce dans les moyens de positionnement du support ;
- on calcule une position relative compensée de l'organe de fixation par rapport au corps en utilisant un modèle mathématique tenant compte au moins de la température du support et de la position relative déterminée lors du positionnement de la pièce dans les moyens de positionnement du support et on utilise cette position relative compensée pour le calcul de l'écart à la position relative de référence.

L'invention a en outre pour objet un dispositif de vérification du positionnement d'une pièce dans un support du type précité,
caractérisé en ce que le dispositif comprend :
- des moyens de calcul de l'écart entre la position relative déterminée lorsque la pièce est fixée dans les moyens de positionnement du support et une position relative de référence ;
- des moyens de comparaison de cet écart à un écart de référence qui est fonction d'au moins un écart calculé lors d'un précédent positionnement de référence de la pièce dans les moyens de positionnement du support ; et
- des moyens d'expression de la qualité du positionnement de la pièce en fonction du résultat obtenu par les moyens de comparaison.

Le dispositif suivant l'invention peut comporter une ou plusieurs des caractéristiques suivantes, prises isolément ou suivant toutes les combinaisons possibles :
- l'organe de fixation est un tirant monté coulissant le long d'un axe dans le corps ;
- l'écart de référence est fonction de l'écart calculé lors du dernier positionnement de référence de la pièce dans les moyens de positionnement du support ;
- l'écart de référence est fonction de la moyenne d'une pluralité d'écarts calculés lors de précédents positionnements de référence de la pièce dans les moyens de positionnement du support ;
- la position relative de référence est la position relative de la pièce déterminée lors du premier positionnement de cette pièce dans les moyens de positionnement du support ;
- la position relative de référence est la position relative déterminée lors d'un précédent positionnement de référence d'une autre pièce dans les moyens de positionnement du support ;
- il comprend en outre des moyens de calcul d'une position relative compensée de l'organe de fixation par rapport au corps, utilisant un modèle mathématique tenant compte au moins de la température du support et de la position relative déterminée lors du positionnement de la pièce dans les moyens de positionnement du support et les moyens de calcul de l'écart utilisent la position relative compensée pour le calcul de l'écart à la position relative de référence ;
- les moyens de détermination comprennent un capteur analogique ;
- les moyens de détermination sont constitués, d'une part, par un tronçon de l'organe de fixation qui comporte une zone à surface convergente, et d'autre part, par un capteur de distance situé en regard.

Des exemples de mise en oeuvre de l'invention vont maintenant être décrits en regard des dessins annexés, sur lesquels :
- la Figure 1 est une vue schématique en coupe axiale d'un support d'outil rotatif du type précité, en position ouverte ;
- la Figure 2 est une vue analogue à la Figure 1 dans laquelle un outil est correctement positionné dans l'évidement de positionnement ;
- la Figure 3 est une vue analogue à la Figure 2 dans laquelle l'outil est mal positionné ;
- la Figure 4 est une vue latérale schématique d'un moyen de détermination de la position relative du tirant d'un support d'outil du type précité et de ce support d'outil ;
- la Figure 5 est un organigramme explicitant les différentes étapes d'un premier mode de mise en oeuvre du procédé selon l'invention ;
- la Figure 6 est un organigramme explicitant les différentes étapes d'un second mode de mise en oeuvre du procédé selon l'invention ;
- la Figure 7 est un graphe représentant la position relative du tirant par rapport au corps déterminée en fonction des opérations successives de positionnement d'un outil A dans l'évidement du support, dans le premier mode de mise en oeuvre du procédé selon l'invention ; et
- la Figure 8 est un graphe représentant la position relative déterminée en fonction des opérations successives de positionnement alternées de deux outils A et B, dans le deuxième mode de mise en oeuvre du procédé selon l'invention.

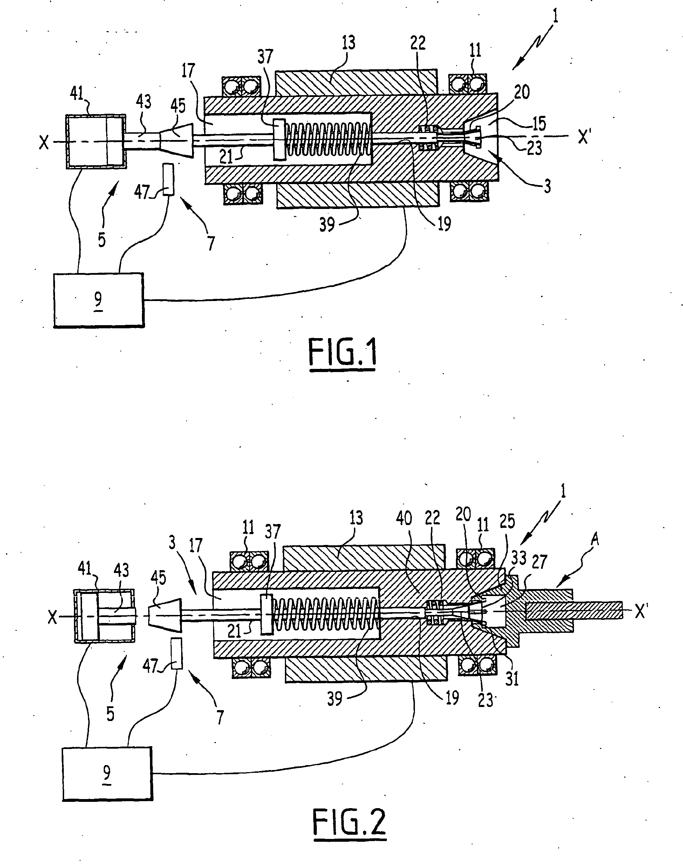

Le support d'outil représenté sur les Figures 1 à 3 est relatif à un centre d'usinage automatisé destiné à effectuer une pluralité d'opérations lors de cycles de fabrication de pièces mécaniques complexes en grande série.

Comme illustré sur la Figure 1, ce support d'outil comprend un corps 1, mobile en rotation par rapport au bâti du centre d'usinage (non représenté), un tirant 3 de fixation d'outil, monté coulissant dans le corps 1, des moyens 5 de déplacement du tirant en translation par rapport au corps 1, et des moyens 7 de détermination de la position relative du tirant 3 par rapport au corps 1. Le support d'outil est par ailleurs relié à une unité centrale de pilotage 9 externe qui assure son fonctionnement.

Le corps 1 est de forme cylindrique. Il est monté libre en rotation par rapport au bâti du centre d'usinage autour de l'axe principal X-X' du cylindre au moyen de roulements 11 solidaires du bâti. Un moteur électrique 13 permet l'entraînement en rotation du corps 1 lors d'une opération d'usinage.

Le corps 1 comprend à son extrémité avant (à droite sur les Figures 1 à 3) un évidement 15 de positionnement d'outil ayant une symétrie de révolution par rapport à l'axe X-X'. Il comprend en outre une cavité borgne 17 cylindrique, ouverte vers l'arrière. Un alésage 19 cylindrique d'axe X-X' relie la cavité 17 à l'évidement de positionnement 15.

Par ailleurs, des griffes de serrage 20, élastiquement déformables radialement, sont montées sur l'extrémité avant de la tige 21. L'extrémité avant de ces griffes 20 est en saillie dans l'évidement de positionnement 15, et l'extrémité arrière de ces griffes comprend un épaulement extérieur qui coopère avec un épaulement du corps 1 et avec un organe élastique 22 pour empêcher le déplacement des griffes 20 par rapport à ce corps 1 suivant l'axe X-X'.

Le tirant 3 comprend une tige 21 cylindrique de longueur supérieure à celle du corps 1, coulissante dans l'alésage 19, permettant au tirant 3 de se déplacer en translation suivant l'axe X-X'.

L'extrémité avant de la tige 21, en regard de l'évidement 15, est munie d'un organe tronconique 23 de fixation de l'outil par écartement des griffes 20.

Cet organe de fixation 23 comprend un tronçon conique divergent vers l'avant, adapté pour déformer les griffes de serrage 20 radialement vers l'extérieur lors du déplacement du tirant 3 vers l'arrière.

L'organe de fixation 23 s'adapte à un outil A représenté sur la Figure 2. Cet outil A comprend une embase 25. La surface extérieure de l'embase 25 est de forme complémentaire à celle de la surface extérieure de l'évidement 15 du corps 1.

L'embase 25 est munie d'une cavité 27 cylindrique longitudinale, qui s'ouvre vers l'arrière de l'outil A. Le diamètre de la cavité 27 est adapté pour le passage du tronçon conique 23 et des griffes 20 en position rétractée.

La cavité 27 de l'outil A est par ailleurs munie d'un épaulement 31 annulaire d'appui pour la surface arrière 33 des griffes de serrage 20 en position expansée.

La tige 21 est par ailleurs munie, dans la cavité 17, d'un disque 37 d'appui. Dans cette cavité, la tige 21 traverse un ressort hélicoïdal 39 comprimé entre le fond 40 de la cavité 17 et, la surface avant du disque d'appui 37. Par conséquent, le ressort 39 exerce une force de rappel vers l'arrière sur le tirant 3. L'organe de fixation 23 est ainsi rappelé en permanence vers le fond de l'évidement 15.

Les moyens de déplacement du tirant 5 sont placés en regard de l'extrémité arrière de la tige 21. Ils comprennent un vérin 41 hydraulique à tige de piston 43, d'axe X-X'. La tige 43 est placée de sorte à pouvoir entrer en contact avec l'extrémité arrière de la tige 21, et à surmonter la force de rappel créée par le ressort 39. Le vérin 41 peut alors provoquer le déplacement du tirant 3 selon l'axe X-X', de sorte que l'organe de fixation 23 se déplace vers l'extérieur de l'évidement de positionnement 15 et permette ainsi la rétractation élastique des griffes 20 vers l'axe X-X'.

Les moyens 7 de détermination de la position relative du tirant 3 par rapport au corps 1 comprennent un drapeau 45 conique tronqué, convergent vers l'arrière, monté à l'extrémité arrière du tirant 3, et un capteur de distance 47, analogique, relié à l'unité centrale 9. De manière équivalente, le drapeau conique pourrait être convergent vers l'avant.

Une opération de positionnement d'un outil A dans le corps 1 va maintenant être décrite.

Initialement, comme illustré sur la Figure 1, la tige de piston 43 est maintenue par le vérin hydraulique 41 en position déployée. Elle s'oppose à la force de rappel du ressort 39 et maintient le tirant 3 en position ouverte, avec l'organe de fixation 23 en saillie dans l'évidement de positionnement 15.

L'outil A est positionné sur l'organe de fixation 23 via la cavité 27. Cette opération peut être réalisée manuellement par un opérateur, ou automatiquement au moyen d'un automate (non représenté) piloté par l'unité de commande 9.

Ensuite, l'opérateur commande le serrage de l'outil A sur le corps 1 au moyen de l'unité de commande 9. La tige de piston 43 est rétractée. Le ressort 39 se déploie et provoque le déplacement de l'organe de fixation 23 du tirant 3 vers l'intérieur de l'évidement de positionnement 15. Les griffes de serrage 20 s'écartent vers les parois latérales de l'évidement 15. La surface arrière 33 de ces griffes 20 se plaque alors contre l'épaulement annulaire d'appui 31 de l'outil A. L'embase 25 de l'outil se positionne dans l'évidement 15.

Le ressort 39 est adapté pour rester en compression dans cette position. L'outil A est alors maintenu en position dans l'évidement 15 du support d'outil lors de l'opération d'usinage, comme illustré sur la Figure 2.

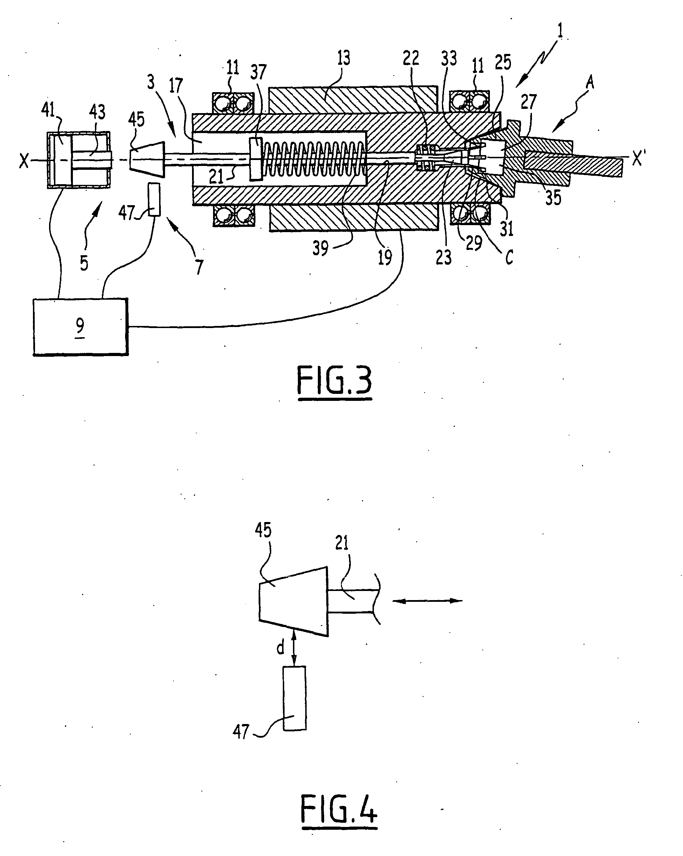

Comme représenté sur la figure 4, le capteur de distance 47 mesure, perpendiculairement à l'axe X-X', la distance d qui le sépare de la surface du drapeau 45. Cette distance d est analysée par l'unité centrale 9 pour en déduire la position axiale relative du tirant 3 par rapport au corps 1, grâce à la conicité du drapeau 45.

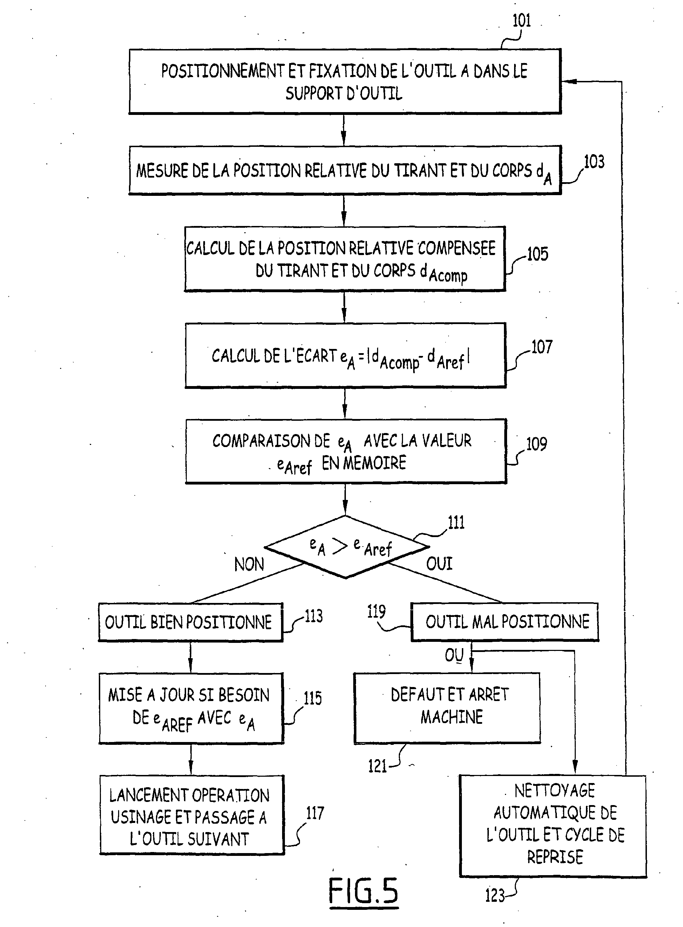

Un premier procédé de vérification du positionnement d'un outil A dans le corps du support d'outil va maintenant être décrit, comme exemple, en référence à la Figure 5.

Lors du premier positionnement de l'outil A dans le corps 1, l'opérateur doit vérifier manuellement que l'outil A est bien positionné (comme illustré à la Figure 2). Une valeur de référence d_{Aref} de la position relative du tirant 3 par rapport au corps 1 lors de ce premier positionnement est alors enregistrée par l'unité centrale 9.

Lors d'un positionnement ultérieur de l'outil A sur la machine (étape 101 de la Figure 5), l'outil A est fixé sur le corps 1. La position relative d_{A} du tirant 3 par rapport au corps 1 est déterminée par l'ensemble constitué par le drapeau 45 et le capteur 43 de distance (étape 103).

Pour tenir compte de l'évolution du tirant 3 lors d'opérations répétitives (par exemple échauffement par rapport à la position angulaire ou arrosage), la valeur d_{A} de cette position est compensée par l'unité centrale 9 en utilisant un modèle mathématique qui tient compte de l'évolution du support d'outil (étape 105). La valeur d_{Acomp} obtenue est donc plus significative dans le cas de fabrications en grandes séries, où le support d'outil évolue progressivement.

L'unité de commande calcule alors l'écart e_{A} égal à la valeur absolue de la différence entre d_{Acomp} et d_{Aref} (étape 107).

Dans une étape ultérieure 109, l'unité de commande 9 compare l'écart calculé e_{A} à un écart de référence e_{Aref}. Cet écart de référence est fonction de l'écart mesuré lors d'un positionnement précédent de l'outil A (par exemple écart mesuré précédemment plus une tolérance). Cet écart e_{Aref} peut être aussi fonction d'une moyenne glissante sur une pluralité d'écarts e_{A} calculés lors de précédents positionnements corrects de l'outil A.

Le fait que l'écart de référence e_{Aref} évolue au fur et à mesure des positionnements de l'outil A permet de tenir compte de l'usure du socle 25 de l'outil A et de la déformation du tirant 3.

A l'étape 111, si l'écart calculé e_{A} est inférieur à l'écart de référence e_{Aref}, l'outil est considéré comme bien positionné (étape 113). La valeur de l'écart calculé e_{A} peut être utilisée pour mettre à jour l'écart de référence e_{Aref} (étape 115). L'opération d'usinage peut être effectuée (étape 117).

Si cet écart calculé e_{A} est supérieur à l'écart de référence e_{Aref}, l'outil A est considéré comme mal positionné (étape 119). Un défaut est transmis à l'opérateur, et la machine est arrêtée (étape 121), ou un cycle de reprise peut être programmé pour nettoyer automatiquement l'outil et le repositionner (étape 123).

La mise en oeuvre du premier procédé selon l'invention sera décrit comme exemple lors de positionnements successifs de l'outil A dans le support.

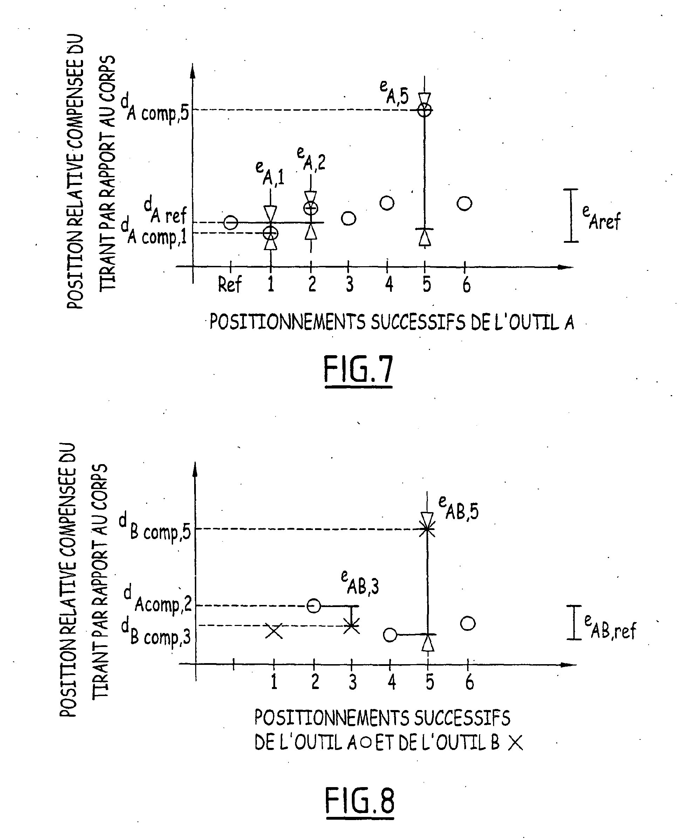

Les positions relatives du tirant et du support déterminées en fonction des positionnements successifs du même outil A dans le corps 1 sont représentées Figure 7.

Lorsque l'outil est bien positionné (Figure 2), la position relative déterminée d_{Acomp} est proche de la position relative déterminée lors du positionnement de référence d_{Aref}. C'est le cas par exemple sur la Figure 7 pour les positionnements 1, 2, 3, 4, 6 de l'outil A, dans lequel l'écart e_{A} calculé est inférieur à e_{Aref}.

Lorsque l'outil est mal positionné, en raison par exemple d'un copeau C coincé entre l'embase 25 de l'outil A et la surface de l'évidement 15 (Figure 3), l'organe de fixation 23 du tirant 3 sera plus éloigné du fond de l'évidement 15.

Comme illustré dans le positionnement 5 de la Figure 7, la position du tirant 3 sera donc décalée et la position relative déterminée d_{Acomp,5} sera significativement différente de la position relative déterminée lors d'un positionnement de référence. L'écart e_{A,5} est donc nettement supérieur à l'écart de référence e_{Aref}.

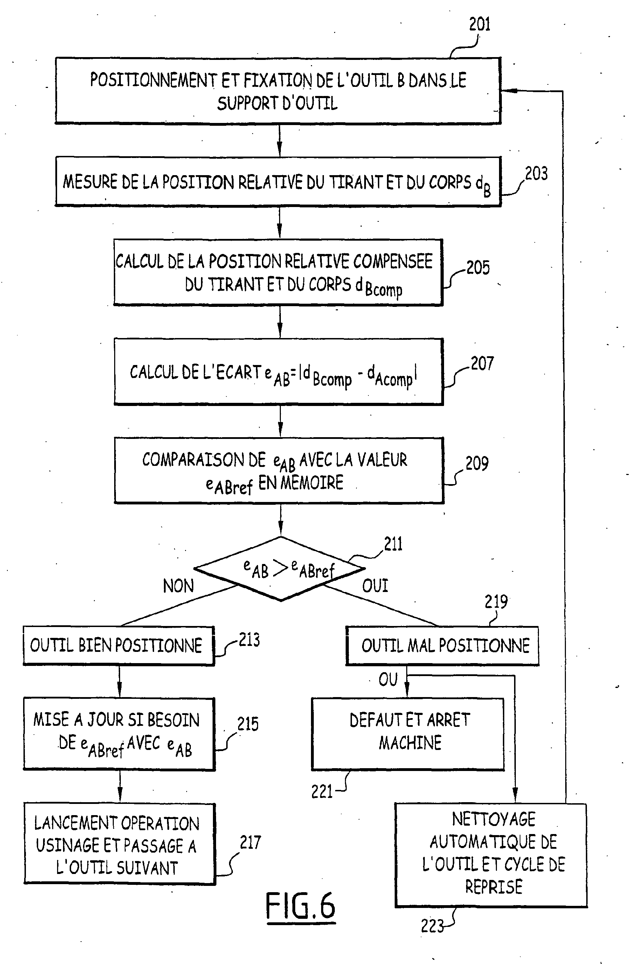

Un second procédé de vérification selon l'invention est décrit dans l'organigramme de la Figure 6.

Dans ce procédé, on vérifie le positionnement d'un second outil B par rapport au positionnement précédent du premier outil A.

Comme dans le procédé précédemment décrit, on détermine la position relative corrigée d_{Bcomp} du tirant 3 par rapport au corps 1 lorsque l'outil B est fixé dans le corps 1 (étapes 201 à 205).

Cependant, à la différence du premier procédé, on calcule l'écart e_{AB} de cette position d_{Bcomp} à la position relative corrigée d_{Acomp} obtenue lors du dernier positionnement correct de l'outil A (étape 207).

L'écart obtenu e_{AB} est comparé à un écart de référence e_{ABref}, qui est fonction de l'écart calculé lors du dernier positionnement correct de l'outil B par rapport à l'outil A (étape 209). De même, une moyenne glissante sur une pluralité d'écarts de positionnements corrects entre l'outil B et l'outil A peut être utilisée.

Les étapes suivantes 213 à 223 sont analogues aux étapes 113 à 123.

La mise en oeuvre du second procédé selon l'invention lors d'utilisations alternées successives de l'outil A et de l'outil B est illustrée sur la Figure 7.

Comme décrit dans le premier procédé, lorsque l'outil B se positionne de manière incorrecte (positionnement 5), la position relative déterminée du tirant 3 est significativement différente, l'écart e_{AB} par rapport à la position relative déterminée de l'outil A précédente (positionnement 4) est nettement supérieur à l'écart de référence e_{ABref}.

En variante, les moyens 7 de détermination de la position relative du tirant 3 par rapport au corps 1 peuvent comprendre un laser optique ou un palpeur.

Grâce à l'invention qui vient d'être décrite, il est possible de disposer d'un procédé de vérification fiable du positionnement d'une pluralité d'outils dans un support d'outil lors d'opérations successives d'usinage de pièces fabriquées en grande série, qui maintient une productivité maximale.

Ce procédé tient compte en outre de l'évolution thermique du support d'outil et de l'usure mécanique de la liaison entre l'outil et son support.

Ce procédé peut être utilisé dans d'autres applications pour lesquelles un positionnement relatif précis de deux pièces est essentiel, telles que le bridage de pièces automobiles en vue de leur usinage.

## Revendications

1. Procédé de vérification du positionnement d'une pièce mécanique (A), notamment d'un outil, dans un support, notamment une broche ou une électrobroche comprenant :
- un corps (1) de support muni à une extrémité de moyens de positionnement (15), notamment d'un évidement de positionnement, de la pièce (A) ;
- un organe (3) de fixation de la pièce (A), monté mobile dans le corps (1) entre une première position permettant la mise en place de la pièce (A) et au moins une seconde position dans laquelle la pièce (A) est fixée dans les moyens de positionnement (15) ;
- des moyens (7) de détermination de la position relative de l'organe de fixation (3) par rapport au corps (1) ;
**caractérisé en ce qu**'il comprend les étapes suivantes :
- on positionne et on fixe la pièce (A) dans les moyens de positionnement (15) ;
- on calcule l'écart (e_{A} ; e_{AB}) entre la position (d_{A}) relative déterminée et une position relative de référence (d_{Aref} ; d_{B}) ;
- on compare cet écart (e_{A} ; e_{AB}) à un écart de référence (e_{Aref} ; e_{ABref}) qui est fonction d'au moins un écart calculé lors d'un précédent positionnement de référence d'une pièce (A ; B) dans les moyens de positionnement (15) du support ; et
- on exprime la qualité du positionnement de la pièce (A) en fonction du résultat de cette comparaison.

2. Procédé selon la revendication 1, **caractérisé en ce que** l'organe de fixation (3) est un tirant (3) monté coulissant dans le corps (1) le long d'un axe (X-X').

3. Procédé selon la revendication 1 ou 2, **caractérisé en ce que** l'écart de référence (e_{A} ; e_{AB}) est fonction de l'écart calculé lors du dernier positionnement de référence de la pièce (A) dans les moyens de positionnement (15) du support.

4. Procédé selon l'une quelconque des revendications 1 à 3, **caractérisé en ce que** l'écart de référence (e_{A} ; e_{AB}) est fonction de la moyenne d'une pluralité d'écarts calculés lors de précédents positionnements de référence de la pièce (A) dans les moyens de positionnement (15) du support.

5. Procédé selon l'une quelconque des revendications 1 à 4, **caractérisé en ce que** la position relative de référence (d_{Aref}) est la position relative de la pièce (A) déterminée lors du premier positionnement de cette pièce (A) dans les moyens de positionnement (15) du support.

6. Procédé selon l'une quelconque des revendications 1 à 4, **caractérisé en ce que** la position relative de référence (d_{B}) est la position relative déterminée lors d'un précédent positionnement de référence d'une autre pièce (B) dans les moyens de positionnement (15) du support.

7. Procédé selon l'une quelconque des revendications 1 à 6, **caractérisé en ce qu**'il comprend en outre l'étape suivante :
- on calcule une position relative compensée (d_{Acomp}) de l'organe de fixation (3) par rapport au corps (1) en utilisant un modèle mathématique tenant compte au moins de la température du support et de la position relative (d_{A}) déterminée lors du positionnement de la pièce (A) dans les moyens de positionnement (15) du support;
et **caractérisé en ce que** :
- on utilise cette position relative compensée (d_{Acomp}) pour le calcul de l'écart (e_{A} ; e_{AB}) à la position relative de référence (d_{Aref} ; d_{Bcomp}).

8. Dispositif de vérification du positionnement d'une pièce mécanique (A), notamment un outil, dans un support, notamment une broche ou une électrobroche comprenant :
- un corps (1) de support muni à une extrémité de moyens de positionnement (15), notamment d'un évidement de positionnement, de la pièce (A) ;
- un organe de fixation de la pièce (3), monté mobile dans le corps (1) entre une première position permettant la mise en place de la pièce (A) et au moins une seconde position dans laquelle la pièce est fixée dans les moyens de positionnement (15) ;
- des moyens de détermination (7) de la position relative de l'organe de fixation (3) par rapport au corps (1) ;
le dispositif étant **caractérisé en ce qu**'il comprend :
- des moyens (9) de calcul de l'écart (e_{A}; e_{AB}) entre la position relative déterminée (d_{A}) lorsque la pièce est fixée dans les moyens de positionnement du support et une position relative de référence (d_{Aref} ; d_{B}) ;
- des moyens (9) de comparaison de cet écart (e_{A} ; e_{AB}) à un écart de référence (e_{Aref} : e_{ABref}) qui est fonction d'au moins un écart calculé lors d'un précédent positionnement de référence d'une pièce (A ; B) dans les moyens de positionnement (15) du support ;
- des moyens (9) d'expression de la qualité du positionnement de la pièce (A) en fonction du résultat obtenu par les moyens de comparaison.

9. Dispositif selon la revendication 8, **caractérisé en ce que** l'organe de fixation (3) est un tirant monté coulissant le long d'un axe (X-X') dans le corps (1).

10. Dispositif de vérification du positionnement d'un outil dans un support d'outil selon la revendication 8 ou 9, **caractérisé en ce que** l'écart de référence (e_{Aref} ; e_{ABref}) est fonction de l'écart calculé lors du dernier positionnement de référence de la pièce (A) dans les moyens de positionnement (15) du support.

11. Dispositif selon l'une quelconque des revendications 8 à 10, **caractérisé en ce que** l'écart de référence (e_{Aref} ; e_{ABref}) est fonction de la moyenne d'une pluralité d'écarts calculés lors de précédents positionnements de référence de la pièce (A) dans les moyens de positionnement (15) du support.

12. Dispositif selon l'une quelconque des revendications 8 à 11, **caractérisé en ce que** la position relative de référence (d_{Aref}) est la position relative de la pièce (A) déterminée lors du premier positionnement de cette pièce (A) dans les moyens de positionnement (15) du support.

13. Dispositif selon l'une quelconque des revendications 8 à 11, **caractérisé en ce que** la position relative de référence (d_{B}) est la position relative déterminée lors d'un précédent positionnement de référence d'une autre pièce (B) dans les moyens de positionnement (15) du support.

14. Dispositif selon l'une quelconque des revendications 8 à 13, **caractérisé en ce qu**'il comprend en outre :
- des moyens (9) de calcul d'une position relative compensée (d_{Acomp}) de l'organe de fixation (3) par rapport au corps (1), utilisant un modèle mathématique tenant compte au moins de la température du support et de la position relative déterminée (d_{A}) lors du positionnement de la pièce (A) dans les moyens de positionnement du support (15)
et **caractérisé en ce que** :
- les moyens (9) de calcul de l'écart utilisent la position relative compensée (d_{Acomp}) pour le calcul de l'écart (e_{A} ; e_{AB}) à la position relative de référence (d_{Aref} ; d_{Bcomp}).

15. Dispositif selon l'une quelconque des revendications 8 à 14, **caractérisé en ce que** les moyens de détermination (7) comprennent un capteur analogique (47) .

16. Dispositif selon la revendication 15 **caractérisé en ce que** les moyens de détermination (7) sont constitués d'une part, par un tronçon de l'organe de fixation (3) qui comporte une zone (45) à surface convergente, et d'autre part, par un capteur (47) de distance situé en regard.

## Claims

1. Procedure for verifying the positioning of a mechanical piece (A), in particular a tool, in a holder, which is in particular a spindle or electric spindle, comprised of:
- a holder body (1) equipped at one end with a means (15) of positioning the piece (A), in particular a positioning recess.
- a unit (3) for fixing the piece (A), fitted so that it moves in the body (1) between a first position allowing the piece (A) to be put in place and at least one second position in which the piece (A) is fixed in the means of positioning (15);
- means (7) of determining the relative position of the fixing unit (3) in relation to the body (1);
**characterised by** the fact that it involves the following steps:
- the piece (A) is fixed and positioned in the means of positioning (15);
- the difference (e_{A}; e_{AB}) between the relative position determined (d_{A}) and a reference relative position (d_{Aref}; d_{B}) is calculated;
- this difference (e_{A} ; e_{AB}) is compared to a reference difference (e_{Aref} ;e_{ABref}) which is a function of at least one difference calculated during an earlier reference positioning of a piece (A ; B) in the means of positioning (15) of the holder; and
- the quality of the positioning of the piece (A) is expressed as a function of the result of this comparison.

2. Procedure as described in claim 1, **characterised by** the fact that the fixing unit (3) is a locking device (3) fitted so that it slides inside the body (1) along an axis (X-X').

3. Pocedure as described in claim 1 or 2, **characterised by** the fact that the reference difference (e_{A} ; e_{AB}) is a function of the difference calculated during the last reference positioning of the piece (A) in the means of positioning (15) of the holder.

4. Pocedure as described in any of claims 1 to 3 whatsoever, **characterised by** the fact that the reference difference (e_{A} ; e_{AB}) is a function of the mean of multiple differences calculated during earlier reference positionings of the piece (A) in the means of positioning (15) of the holder;

5. Procedure as described in any of claims 1 to 4 whatsoever, **characterised by** the fact that the relative reference position (d_{Aref}) is the relative position of the piece (A) determined during the first positioning of this piece (A) in the means of positioning (15) of the holder.

6. Procedure as described in any of claims 1 to 4 whatsoever, **characterised by** the fact that the relative reference position (d_{B}) is the relative position determined during an earlier reference positioning of another piece (B) in the means of positioning (15) of the holder.

7. Procedure as described in any of claims 1 to 6 whatsoever, **characterised by** the fact in addition it includes the following step:
- a compensated relative position (d_{Acomp}) of the fixing unit (3) in relation to the body (1) is calculated using a mathematical model which takes into consideration at least the temperature of the holder and the relative position (d_{A}) determined during the positioning of the piece (A) in the means of positioning (15) of the holder;
and **characterised by** the fact that:
- this compensated relative position (d_{Acomp}) is used for calculating the difference (e_{A}; e_{B}) from the reference relative position (d_{Aref}; d_{Bcomp}).

8. Device for verifying the positioning of a mechanical piece (A), in particular a tool, in a holder, which is in particular a spindle or electric spindle comprised of:
- a holder body (1) equipped at one end with a means of positioning (15) the piece (A), in particular a positioning recess;
- a unit for fixing the piece (3), fitted so that it moves in the body (1) between a first position which allows the piece (A) to be put in place, and at least one second position in which the piece is fixed in the means of positioning (15);
- means (7) of determining the relative position of the fixing unit (3) in relation to the body (1);
with the device being **characterised by** the fact that it involves:
- means (9) of calculating the difference (e_{A}; e_{AB}) between the relative position (d_{A}) determined when the piece is fitted into the means of positioning of the holder and a relative reference position (d_{Aref}; d_{B});
- means (9) for comparing this difference (e_{A} ; e_{AB}) to a reference difference (e_{Aref}; e_{ABref}) which is a function of at least one difference calculated during an earlier reference positioning of a piece(A ; B) in the means of positioning (15) of the holder;
- means (9) of expressing the quality of the positioning of the piece (A) as a function of the result obtained by the means of comparison.

9. Device as described in claim 8, **characterised by** the fact that the fixing unit (3) is a locking device fitted so that it slides along an axis (X-X') inside the body (1).

10. Device for verifying the positioning of a tool in a tool holder as described in claim 8 or 9, **characterised by** the fact that the reference difference (e_{Aref} ; e_{ABref}) is a function of the difference calculated during the last reference positioning of the piece (A) in the means of positioning (15) of the holder.

11. Procedure as described in any of claims 8 to 10 whatsoever, **characterised by** the fact that the reference difference (e_{Arcf} ; e_{ABref}) is a function of the average of multiple differences calculated during earlier reference positionings of the piece (A) in the means of positioning (15) of the holder,

12. Device as described in any of claims 8 to 11 whatsoever, **characterised by** the fact that the reference relative position (d_{Aref}) is the relative position of the piece (A) determined during the first positioning of this piece (A) in the means of positioning (15) of the holder.

13. Device as described in any of claims 8 to 11 whatsoever, **characterised by** the fact that the reference relative position (d_{B}) is the relative position determined during an earlier reference positioning of another piece (B) in the means of positioning (15) of the holder.

14. Device as described in any of claims 8 to 13 whatsoever, **characterised by** the fact that is also includes:
- means (9) of calculating a compensated relative position (d_{Acomp}) of the fixing unit (3) in relation to the body (1), using a mathematical model which takes into consideration at least the temperature of the holder and the relative position (d_{A}) determined during the positioning of the piece (A) in the means of positioning of the holder;
and **characterised by** the fact that:
- the means (9) for calculating the difference uses the compensated relative position (d_{Acomp}) for the calculation of the difference (e_{A}; e_{B}) from the reference relative position (d_{Aref} ; d_{Bcomp}).

15. Device as described in any of claims 8 to 14 whatsoever, **characterised by** the fact that the means of determination (7) include an analogue sensor (47).

16. Device as described in claim 15 **characterised by** the fact that the means of determination (7) are made up on the one hand of a section of the fixing unit (3) which includes a zone (45) with convergent surfaces, and on the other hand of a distance sensor (47) located opposite it.

## Patentansprüche

1. Verfahren zur Überprüfung der Positionierung eines mechanischen Teiles (A), insbesondere eines Werkzeuges, in einem Träger, insbesondere einer Spindel oder Motorspindel, umfassend:
- einen Trägerkörper (1), der an einem Ende mit Positionierungsmitteln (15), insbesondere einer Positionierungsausnehmung, für das Teil (A) versehen ist,
- ein Organ (3) zur Befestigung des Teiles (A), das im Körper (1) zwischen einer ersten Stellung, die das Einsetzen des Teiles (A) erlaubt, und mindestens einer zweiten Stellung, in der das Teil (A) in den Positionierungsmitteln (15) befestigt ist, beweglich angebracht ist,
- Mittel (7) zur Bestimmung der Stellung des Befestigungsorgans (3) relativ zum Körper (1),
**dadurch gekennzeichnet, dass** es die folgenden Schritte umfasst:
- Positionieren und Befestigen des Teiles (A) in den Positionierungsmitteln (15),
- Berechnung der Abweichung (e_{A}; e_{AB}) der bestimmten relativen Stellung(d_{A}) von einer relativen Bezugsstellung (d_{Aref}; d_{B}),
- Vergleich dieser Abweichung (e_{A}, e_{AB}) mit einer Bezugsabweichung (e_{Aref}; e_{ABref}), die von mindestens einer bei einer vorangehenden Bezugspositionierung eines Teiles (A; B) in den Positionierungsmitteln (15) des Trägers berechneten Abweichung abhängig ist, und
- Ausdrücken der Qualität der Positionierung des Teils (A) in Abhängigkeit vom Ergebnis dieses Vergleichs.

2. Verfahren nach Patentanspruch 1 , **dadurch gekennzeichnet, dass** das Befestigungsorgan (3) eine Spannstange (3) ist, die längs einer Achse (X-X') im Körper (1) gleitend montiert ist.

3. Verfahren nach Patentanspruch 1 oder 2, **dadurch gekennzeichnet, dass** die Bezugsabweichung (e_{A}, e_{AB}) abhängig ist von der Abweichung, die bei der letzten Bezugspositionierung des Teiles (A) in den Positionierungsmitteln (15) des Trägers berechnet wurde.

4. Verfahren nach irgendeinem der Patentansprüche 1 bis 3, **dadurch gekennzeichnet, dass** die Bezugsabweichung (e_{A}, e_{AB}) vom Mittelwert mehrerer Abweichungen abhängig ist, die bei vorangehenden Bezugspositionierungen des Teiles (A) in den Positionierungsmitteln (15) des Trägers berechnet wurden.

5. Verfahren nach irgendeinem der Patentansprüche 1 bis 4, **dadurch gekennzeichnet, dass** die relative Bezugsstellung (d_{Aref}) die relative Stellung des Teiles (A) ist, die bei der ersten Positionierung dieses Teiles (A) in den Positionierungsmitteln (15) des Trägers bestimmt wurde.

6. Verfahren nach irgendeinem der Patentansprüche 1 bis 4, **dadurch gekennzeichnet, dass** die relative Bezugsstellung (d_{B}) die relative Stellung ist, die bei einer vorangehenden Bezugspositionierung eines anderen Teiles (B) in den Positionierungsmitteln (15) des Trägers bestimmt wurde.

7. Verfahren nach irgendeinem der Patentansprüche 1 bis 6, **dadurch gekennzeichnet, dass** es außerdem den folgenden Schritt umfasst:
- Berechnung einer kompensierten relativen Stellung (d_{Acomp}) des Befestigungsorgans (3) relativ zum Körper (1) unter Anwendung eines mathematischen Modells, das mindestens die Temperatur des Trägers berücksichtigt und die relative Stellung (dA), die bei der Positionierung des Teiles (A) in den Positionierungsmitteln (15) des Trägers bestimmt wurde,
und **dadurch gekennzeichnet, dass**
- diese kompensierte relative Stellung (d_{Acomp}) für die Berechnung der Abweichung (e_{A}, e_{AB}) von der relativen Bezugsstellung (d_{Aref}, d_{Bcomp}) verwendet wird.

8. Vorrichtung zur Prüfung der Positionierung eines mechanischen Teiles (A), insbesondere eines Werkzeuges, in einem Träger, insbesondere einer Spindel oder Motorspindel, umfassend:
- einen Trägerkörper (1), der an einem Ende mit Positionierungsmitteln (15), insbesondere einer Positionierungsausnehmung, für das Teil (A) versehen ist,
- ein Befestigungsorgan (3) für das Teil, das im Körper (1) zwischen einer ersten Stellung, die das Einsetzen des Teiles (A) erlaubt, und mindestens einer zweiten Stellung, in der das Teil in den Positionierungsmitteln (15) befestigt ist, beweglich angebracht ist,
- Mittel (7) zur Bestimmung der relativen Stellung des Befestigungsorgans (3) gegenüber dem Körper (1),
wobei die Vorrichtung **dadurch gekennzeichnet ist, dass** sie umfasst:
- Mittel (9) zur Berechnung der Abweichung (e_{A}; e_{AB}) der relativen Stellung (d_{A}), die bestimmt wird, wenn das Teil in den Positionierungsmitteln des Trägers befestigt ist, von einer relativen Bezugsstellung (d_{Aref}; d_{B}),
- Mittel (9) zum Vergleich dieser Abweichung (e_{A}, e_{AB}) mit einer Bezugsabweichung (e_{Aref}; e_{ABref}), die von mindestens einer bei einer vorangehenden Bezugspositionierung eines Teiles (A; B) in den Positionierungsmitteln (15) des Trägers berechneten Abweichung abhängig ist,
- Mittel (9) zum Ausdrücken der Qualität der Positionierung des Teils (A) in Abhängigkeit vom von den Vergleichsmitteln erhaltenen Ergebnis.

9. Vorrichtung nach Patentanspruch 8, **dadurch gekennzeichnet, dass** das Befestigungsorgan (3) eine Spannstange ist, die längs einer Achse (X-X') im Körper (1) gleitend montiert ist.

10. Vorrichtung zur Prüfung der Stellung eines Werkzeuges in einem Werkzeugträger nach Patentanspruch 8 oder 9, **dadurch gekennzeichnet, dass** die Bezugsabweichung (e_{Aref}, e_{ABref}) abhängig ist von der Abweichung, die bei der letzten Bezugspositionierung des Teiles (A) in den Positionierungsmitteln (15) des Trägers berechnet wurde.

11. Vorrichtung nach irgendeinem der Patentansprüche 8 bis 10, **dadurch gekennzeichnet, dass** die Bezugsabweichung (e_{Aref}, e_{ABref}) abhängig ist vom Mittelwert mehrerer Abweichungen, die bei vorangehenden Bezugspositionierungen des Teiles (A) in den Positionierungsmitteln (15) des Trägers berechnet wurden.

12. Vorrichtung nach irgendeinem der Patentansprüche 8 bis 11, **dadurch gekennzeichnet, dass** die relative Bezugsstellung (d_{Aref}) die relative Stellung des Teiles (A) ist, die bei der ersten Positionierung dieses Teiles (A) in den Positionierungsmitteln (15) des Trägers bestimmt wurde.

13. Vorrichtung nach irgendeinem der Patentansprüche 8 bis 11, **dadurch gekennzeichnet, dass** die relative Bezugsstellung (d_{B}) die relative Stellung ist, die bei einer vorangehenden Bezugspositionierung eines anderen Teiles (B) in den Positionierungsmitteln (15) des Trägers bestimmt wurde.

14. Vorrichtung nach irgendeinem der Patentansprüche 8 bis 13, **dadurch gekennzeichnet, dass** sie außerdem umfasst:
- Mittel (9) zur Berechnung einer kompensierten relativen Stellung (d_{Acomp}) des Befestigungsorgans (3) relativ zum Körper (1) unter Anwendung eines mathematischen Modells, das mindestens die Temperatur des Trägers berücksichtigt und die Bezugsstellung (d_{A}), die bei der Positionierung des Teiles (A) in den Positionierungsmitteln (15) des Trägers bestimmt wurde,
und **dadurch gekennzeichnet, dass**
- die Mittel (9) zur Berechnung der Abweichung die kompensierte relative Stellung (d_{Acomp}) für die Berechnung der Abweichung (e_{A}, e_{AB}) von der relativen Bezugsstellung (d_{Aref}, d_{Bcomp}) verwenden.

15. Vorrichtung nach irgendeinem der Patentansprüche 8 bis 14, **dadurch gekennzeichnet, dass** die Bestimmungsmittel (7) einen Analogsensor (47) umfassen.

16. Vorrichtung nach Patentanspruch 15, **dadurch gekennzeichnet, dass** die Bestimmungsmittel (7) einerseits aus einem Abschnitt des Befestigungsorgans (3) bestehen, das einen Abschnitt (45) mit konvergierender Oberfläche aufweist, und andererseits aus einem gegenüber angeordneten Abstandssensor (47).
